# EUROPEAN PATENT APPLICATION

(11) **EP 2 760 174 A1**
(43) Date of publication of application: **30.07.2014**
(21) Application number: 12841260.8
(22) Date of filing: 28.07.2012
(51) Int. Cl.: H04L 29/06

(54) **VIRTUAL PRIVATE CLOUD ACCESS AUTHENTICATION METHOD AND RELATED APPARATUS**

(30) Priority: 18.10.2011 CN 201110316944
(71) Applicant: Huawei Technologies Co., Ltd., Shenzhen, Guangdong 518129 (CN)
(72) Inventor: LIU, Ying, Shenzhen Guangdong 518129 (CN); HU, Shihui, Shenzhen Guangdong 518129 (CN); YU, Delei, Shenzhen Guangdong 518129 (CN)
(74) Representative: Maiwald Patentanwalts GmbH
(86) International application number: PCT/CN2012/079308
(87) International publication number: WO 2013/056585

(57) **Abstract**

Embodiments of the present invention disclose a method and a related apparatus for authenticating access of a virtual private cloud, which are used for performing VPC access authentication between networks that communicate with each other using an IP routing protocol. The method according to the embodiment of the present invention includes: receiving, by a VPN routing device, a request for accessing a virtual private network VPN by a virtual private cloud VPC, sent by a cloud manager, where the request for accessing a VPN by a VPC carries an identifier of a bearer network of a target VPN and a VPN identifier; and sending, by the VPN routing device, the VPC access request to a network edge device corresponding to the identifier of the bearer network, where the VPC access request carries the VPN identifier, so that the network edge device performs VPC access authentication according to the VPN identifier.

## Description

### CROSS-REFERENCE TO RELATED APPLICATIONS

This application claims priority to Chinese Patent Application No. 201110316944.6, filed with the Chinese Patent Office on October 18, 2011 and entitled "METHOD AND RELATED APPARATUS FOR AUTHENTICATING ACCESS OF VIRTUAL PRIVATE CLOUD ", which is incorporated herein by reference in its entirety.

### TECHNICAL FIELD

The present invention relates to the communications field, and in particular to a method and a related apparatus for authenticating access of a virtual private cloud.

### BACKGROUND

With the popularization of data centers, enterprises no longer need to purchase devices to deploy their own information technology (IT, Information Technology) centers. An enterprise may apply for a group of IT resources from a data center to provide a cloud computing service for the enterprise, and the IT resources are managed by the data center. Hardware resources in the data center provide the cloud service for the enterprise in a form of virtual devices. For example, if the enterprise applies for N servers, the data center does not physically allocate the N servers to the enterprise for use; instead, based on a user's requirement on servers, such as the requirement on a central processing unit (CPU, Central Processing Unit), a memory, and a hard disk size, the N servers are virtualized from the hardware resources and allocated to the enterprise for use. These virtual servers, namely, resources that the user applies for, form a virtual private cloud (VPC, Virtual Private Cloud). The enterprise user expects to add the VPC created in the data center into a virtual private network (VPN, Virtual Private Network) of its own, so as to securely access resources in the VPC. A bearer network operator needs to perform admission control over the access of the VPC to the VPN so as to avoid erroneous adding of the VPC to the VPN, for example, binding a VPC of company A to a VPN of company B leads to information leakage of company A and causes a security risk. In another aspect, VPN routing information without being authorized should not be spread to unknown sites. Therefore, before being added to the VPN, the VPC needs to be verified, so that a routing spread range is strictly controlled.

In the prior art, the authentication function and configuration parameter acquisition function can be implemented by combining the Institute of Electrical and Electronics Engineers (Institute of Electrical and Electronics Engineers) IEEE802.1x technology and remote authentication dial in user service (RADIUS, Remote Authentication Dial In User Service) technology. However, a provider edge device (PE, Provider Edge) gateway and a data center (Data Center) gateway are connected through an Internet Protocol (IP, Internet Protocol) routing protocol (namely, layer-3 protocol), while the 802.1x technology only applies to an Ethernet protocol (namely, layer-2 protocol); therefore, once arriving at a DC gateway side, a request that requires VPC access authentication cannot be further transmitted.

### SUMMERY

Embodiments of the present invention provide a method and a related apparatus for authenticating access of a virtual private cloud, which are used for performing VPC access authentication between networks that communicate with each other using an IP routing protocol.

According to an aspect of the present invention, a method for authenticating access of virtual private cloud VPC includes:
receiving, by a virtual private network VPN routing device, a request for accessing a virtual private network VPN by a virtual private cloud VPC, sent by a cloud manager, where the request for accessing a VPN by a VPC carries an identifier of a bearer network of a target VPN and a VPN identifier; and
sending, by the VPN routing device, the VPC access request to a network edge device corresponding to the identifier of the bearer network, where the VPC access request carries the VPN identifier, so that the network edge device performs VPC access authentication according to the VPN identifier.

Alternatively, after the sending the VPC access request to the network edge device corresponding to the identifier of the bearer network, the method further includes:
receiving an authentication response returned by the network edge device;
if the authentication response indicates success, extracting a VPN configuration parameter carried in the authentication response, and configuring a VPN instance according to the VPN configuration parameter; and
sending an authentication result to the cloud manager according to the authentication response.

Alternatively, the VPN identifier includes:
a VPN user name;
or, a VPN user name and a password;
or, a VPN name;
or, a VPN name and a password.

Alternatively, the identifier of the bearer network is one or more of: a network edge device address, a bearer network number, a bearer network name, and a target autonomous system AS number;
if the identifier of the bearer network is a network edge device address, the sending the VPC access request to the network edge device corresponding to the identifier of the bearer network includes: sending the VPC access request to a network edge device corresponding to the network edge device address; and
if the identifier of the bearer network is a bearer network number, a bearer network name or a target AS number, the sending the VPC access request to the network edge device corresponding to the identifier of the bearer network includes: sending the VPC access request to a network edge device corresponding to the bearer network number, the bearer network name or the target AS number according to a bearer network routing table.

Alternatively, the sending the VPC access request to the network edge device corresponding to the target AS number according to the bearer network routing table includes:
determining a first network edge device at the next hop according to a path in a bearer network routing list;
sending a VPC access authentication request to the first network edge device, where the VPC access authentication request further carries the target AS number; and
if the first network edge device is not the network edge device corresponding to the target AS number, determining, by the first network edge device, a second network edge device at the next hop according to the bearer network routing table, and continuing to forward the VPC access authentication request to the second network edge device until the VPC access authentication request is forwarded to the network edge device corresponding to the target AS number.

According to another aspect of the present invention, a method for authenticating access of a virtual private cloud VPC, includes:
receiving, by a cloud manager, a VPC creation request, where the VPC creation request includes: an identifier of a bearer network of a target virtual private network VPN and a VPN identifier;
searching, by the cloud manager, for a VPN routing device connected to the bearer network according to the identifier of the bearer network; and
sending, by the cloud manager, a request for adding a VPC into a VPN to the VPN routing device, where the request for accessing a VPN by a VPC carries the identifier of the bearer network and the VPN identifier, so that the VPN routing device uses the VPN identifier to initiate VPC access authentication to a network edge device corresponding to the identifier of the bearer network.

Alternatively, after the sending the request for adding a VPC into a VPN to the VPN routing device, the method includes:
receiving an authentication result returned by the VPN routing device; and
if the authentication result indicates success, creating, by the cloud manager, a VPC in the VPN routing device, and binding the VPC to a VPN configured on the VPN routing device.

Alternatively, the VPN identifier includes:
a VPN user name;
or, a VPN user name and a password;
or, a VPN name;
or, a VPN name and a password.

Alternatively, including:
receiving, by a virtual private network VPN routing device, a request for accessing a VPN by a VPC, sent by a cloud manager, where the request for accessing a VPN by a VPC carries a VPN identifier of a target VPN, and the target VPN corresponds to a unique network edge device; and
sending, by the VPN routing device, the VPC access request to the network edge device, where the VPC access request carries the VPN identifier, so that the network edge device performs VPC access authentication according to the VPN identifier.

Alternatively, after the sending the VPC access request to the network edge device, the method includes:
receiving an authentication response returned by the network edge device;
if the authentication response indicates success, extracting a VPN configuration parameter carried in the authentication response, and configuring a VPN instance according to the VPN configuration parameter; and
sending an authentication result to the cloud manager according to the authentication response.

Alternatively, the VPN identifier includes:
a VPN user name;
or, a VPN user name and a password;
or, a VPN name;
or, a VPN name and a password.

According to still another aspect of the present invention, a method for authenticating access of a virtual private cloud includes:
receiving, by a cloud manager, a VPC creation request, where the VPC creation request includes a VPN identifier of a target VPN, and the target VPN corresponds to a unique bearer network; and
sending, by the cloud manager, a request for adding a VPC into a VPN to a VPN routing device connected to the bearer network, where the request for accessing a VPN by a VPC carries the VPN identifier, so that the VPN routing device uses the VPN identifier to initiate VPC access authentication to a network edge device.

Alternatively, after the sending the request for adding a VPC into a VPN to the VPN routing device, the method includes:
receiving an authentication result returned by the VPN routing device; and
if the authentication result indicates success, creating, by the cloud manager, a VPC in the VPN routing device, and binding the VPC to a VPN configured on the VPN routing device.

Alternatively, the VPN identifier includes:
a VPN user name;
or, a VPN user name and a password;
or, a VPN name;
or, a VPN name and a password.

According to still another aspect of the present invention, a method of authenticating access of a virtual private cloud VPC, includes:
receiving, by a network edge device, a VPC access request sent by a virtual private network VPN routing device, where the VPC access request carries a VPN identifier of a target
VPN;
sending, by the network edge device, an authentication request to an authentication system a bearer network of the target VPN corresponds to, where the authentication request carries the VPN identifier, so that the authentication system authenticates the VPN identifier; and
if the authentication is successful, receiving, by the network edge device, a VPN configuration parameter sent by the authentication system, and returning an authentication response to the VPN routing device, where the authentication response carries the VPN configuration parameter.

Alternatively, after the receiving the VPN configuration parameter sent by the authentication system, the method includes:
extracting a VPN access parameter from the VPN configuration parameter; and
adding the VPN access parameter into an outbound route filtering list ORF, indicating that a VPN routing table in the bearer network may be forwarded to the VPN routing device.

Alternatively, after the receiving the VPN configuration parameter sent by the authentication system, the method includes:
extracting an access bandwidth parameter from the VPN configuration parameter; and
configuring an access bandwidth limit according to the access bandwidth parameter.

According to still another aspect of the present invention, a method for deleting a virtual private cloud VPC, includes:
receiving, by a virtual private network VPN routing device, a VPC deletion request sent by a cloud manager, where the VPC deletion request carries a network edge device address of a bearer network of a target VPN and a VPC identifier;
deleting, by the VPN routing device, a VPN instance corresponding to the VPC identifier; and
sending, by the VPN routing device, a VPC deletion notification to a network edge device corresponding to the network edge device address, where the VPC deletion notification carries the VPC identifier, so that the network edge device notifies an authentication system of deleting related authentication information corresponding to the VPC identifier.

According to still another aspect of the present invention, a method for deleting a virtual private cloud VPC, includes:
receiving, by a cloud manager, a first VPC deletion request, where the first VPC deletion request carries a VPC identifier;
searching, by the cloud manager, for a bearer network of a target virtual private network VPN according to the VPC identifier, and determining a VPN routing device connected to the bearer network and a network edge device address; and
sending, by the cloud manager, a second VPC deletion request to the VPN routing device, where the second VPC deletion request carries the network edge device address and the VPC identifier.

According to still another aspect of the present invention, a virtual private network VPN routing device includes:
a first receiving unit, configured to receive a request for accessing a virtual private network VPN by a virtual private cloud VPC, sent by a cloud manager, where the request for accessing a VPN by a VPC carries an identifier of a bearer network of a target VPN and a VPN identifier; and
a sending unit, configured to send the VPC access request to a network edge device corresponding to the identifier of the bearer network, where the VPC access request carries the VPN identifier, so that the network edge device performs VPC access authentication according to the VPN identifier.

Alternatively, the VPN routing device further includes:
a second receiving unit, configured to receive an authentication response returned by the network edge device;
an instance configuring unit, configured to, if the authentication response indicates success, extract a VPN configuration parameter carried in the authentication response and configure a VPN instance according to the VPN configuration parameter; and
a result responding unit, configured to send an authentication result to the cloud manager according to the authentication response.

According to still another aspect of the present invention, a cloud manager includes:
a request receiving unit, configured to receive a virtual private cloud VPC creation request, where the VPC creation request includes: an identifier of a bearer network of a target virtual private network VPN and a VPN identifier;
a search unit, configured to search for a VPN routing device connected to the bearer network according to the identifier of the bearer network; and
a request sending unit, configured to send a request for adding a VPC into a VPN to the VPN routing device, where the request for accessing a VPN by a VPC carries the identifier of the bearer network and the VPN identifier, so that the VPN routing device uses the VPN identifier to initiate VPC access authentication to a network edge device corresponding to the identifier of the bearer network.

Alternatively, the cloud manager further includes:
a response receiving unit, configured to receive an authentication result returned by the VPN routing device; and
a creating unit, configured to: if the authentication result indicates success, the cloud manager creates a VPC in the VPN routing device and binds the VPC to a VPN configured on the VPN routing device.

According to still another aspect of the present invention, a virtual private network VPN routing device includes:
a VPN request receiving unit, configured to receive a request for accessing a VPN by a virtual private cloud VPC, sent by a cloud manager, where the request for accessing a VPN by a VPC carries a VPN identifier of a target VPN, and the target VPN corresponds to a unique network edge device; and
an access request sending unit, configured to send the VPC access request to the network edge device, where the VPC access request carries the VPN identifier, so that the network edge device performs VPC access authentication according to the VPN identifier.

Alternatively, the VPN routing device further includes:
a receiving unit, configured to receive an authentication response returned by the network edge device;
an instance configuring unit, configured to, if the authentication response indicates success, extract a VPN configuration parameter carried in the authentication response and configure a VPN instance according to the VPN configuration parameter; and
a result responding unit, configured to send an authentication result to the cloud manager according to the authentication response.

According to still another aspect of the present invention, a cloud manager includes:
a virtual private cloud VPC request receiving unit, configured to receive a VPC creation request, where the VPC creation request includes a VPN identifier of a target virtual private network VPN, and the target VPN corresponds to a unique bearer network; and
a VPN request sending unit, configured to send a request for adding a VPC into a VPN to a VPN routing device connected to the bearer network, where the request for accessing a VPN by a VPC carries the VPN identifier, so that the VPN routing device uses the VPN identifier to initiate VPC access authentication to a network edge device.

Alternatively, the cloud manager further includes:
a response receiving unit, configured to receive an authentication result returned by the VPN routing device; and
a creating unit, configured to: if the authentication result indicates success, the cloud manager creates a VPC in the VPN routing device and binds the VPC to a VPN configured on the VPN routing device.

According to still another aspect of the present invention, a network edge device includes:
an access request receiving unit, configured to receive a virtual private cloud VPC access request sent by a virtual private network VPN routing device, where the VPC access request carries a VPN identifier of a target VPN;
an authentication request sending unit, configured to send an authentication request to an authentication system a bearer network of the target VPN corresponds to, where the authentication request carries the VPN identifier, so that the authentication system authenticates the VPN identifier; and
an authentication responding unit, configured to: if the authentication is successful, the network edge device receives a VPN configuration parameter sent by the authentication system and returns an authentication response to the VPN routing device, where the authentication response carries the VPN configuration parameter.

Alternatively, the network edge device further includes:
a first configuring unit, configured to extract a VPN access parameter from the VPN configuration parameter and add the VPN access parameter into an outbound route filtering list ORF, indicating that a VPN routing table in the bearer network may be forwarded to the VPN routing device; and
a second configuring unit, configured to extract an access bandwidth parameter from the VPN configuration parameter and configure an access bandwidth limit according to the access bandwidth parameter.

According to still another aspect of the present invention, a virtual private network VPN routing device includes:
a deletion request receiving unit, configured to receive a virtual private cloud VPC deletion request sent by a cloud manager, where the VPC deletion request carries a network edge device address of a bearer network of a target VPN and a VPC identifier;
an instance deleting unit, configured to delete a VPN instance corresponding to the VPC identifier; and
a notification sending unit, configured to send a VPC deletion notification to a network edge device corresponding to the network edge device address, where the VPC deletion notification carries the VPC identifier, so that the network edge device notifies an authentication system of deleting related authentication information corresponding to the VPC identifier.

According to still another aspect of the present invention, a cloud manager includes:
a deletion receiving unit, configured to receive a first virtual private cloud VPC deletion request, where the first VPC deletion request carries a VPC identifier;
a target searching unit, configured to search for a bearer network of a target virtual private network VPN according to the VPC identifier and determine a VPN routing device connected to the bearer network and a network edge device address; and
a deletion request sending unit, configured to send a second VPC deletion request to the VPN routing device, where the second VPC deletion request carries the network edge device address and the VPC identifier.

The above technical solution indicates that the embodiments of the present invention have the following advantages:
in the embodiments of the present invention, a request for accessing a VPN by a VPC received by a VPN routing device carries an identifier of a bearer network of a target VPN, so that the VPN routing device may find an address of a corresponding network edge device (a network device using an IP routing protocol) according to the identifier of the bearer network, thereby realizing VPC access authentication over a layer-3 communication network, so that the network edge device can perform the VPC access authentication.

### BRIEF DESCRIPTION OF DRAWINGS

FIG. 1 is a schematic flow chart of a method for authenticating access of a virtual private cloud according to an embodiment of the present invention;
FIG. 2 is another schematic flow chart of a method for authenticating access of a virtual private cloud according to an embodiment of the present invention;
FIG. 3 is another schematic flow chart of a method for authenticating access of a virtual private cloud according to an embodiment of the present invention;
FIG. 4 is another schematic flow chart of a method for authenticating access of a virtual private cloud according to an embodiment of the present invention;
FIG. 5 is another schematic flow chart of a method for authenticating access of a virtual private cloud according to an embodiment of the present invention;
FIG. 6 is another schematic flow chart of a method for authenticating access of a virtual private cloud according to an embodiment of the present invention;
FIG. 7 is a schematic flow chart of a method for deleting a virtual private cloud according to an embodiment of the present invention;
FIG. 8 is another schematic flow chart of a method for deleting a virtual private cloud according to an embodiment of the present invention;
FIG. 9 is a schematic structural diagram of a VPN routing device according to an embodiment of the present invention;
FIG. 10 is a schematic structural diagram of a cloud manager according to an embodiment of the present invention;
FIG. 11 is another schematic structural diagram of a VPN routing device according to an embodiment of the present invention;
FIG. 12 is another schematic structural diagram of a cloud manager according to an embodiment of the present invention;
FIG. 13 is a schematic structural diagram of a network edge device according to an embodiment of the present invention;
FIG. 14 is another schematic structural diagram of a VPN routing device according to an embodiment of the present invention;
FIG. 15 is another schematic structural diagram of a cloud manager according to an embodiment of the present invention; and
FIG. 16 is a structural diagram of a cloud network which an embodiment of the present invention belongs to.

### DESCRIPTION OF EMBODIMENTS

Embodiments of the present invention provide a method and a related apparatus for authenticating access of a virtual private cloud for performing VPC access authentication between networks that communicate with each other using an IP routing protocol.

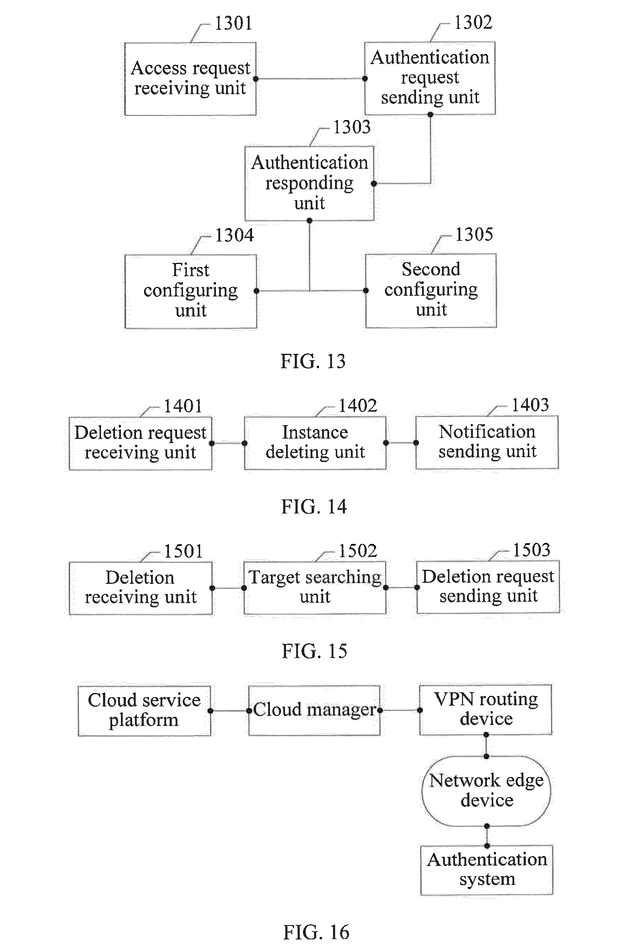

The embodiments of the present invention apply to a cloud network system. As shown in FIG. 16, the cloud network system may include: a cloud service platform, a cloud manager, a VPN routing device, a network edge device, and an authentication system the network edge device corresponds to. The cloud service platform is configured to provide a service interface for a user and receive a service request of the user. The cloud service platform sends the received service request to the cloud manager for processing; the cloud manager is in charge of managing cloud resources and network resources in a data center; the VPN routing device is a routing device of the data center, and therefore the cloud manager may also control and manage the VPN routing device; and two ends of the VPN routing device are connected to the cloud manager and the network edge device respectively.

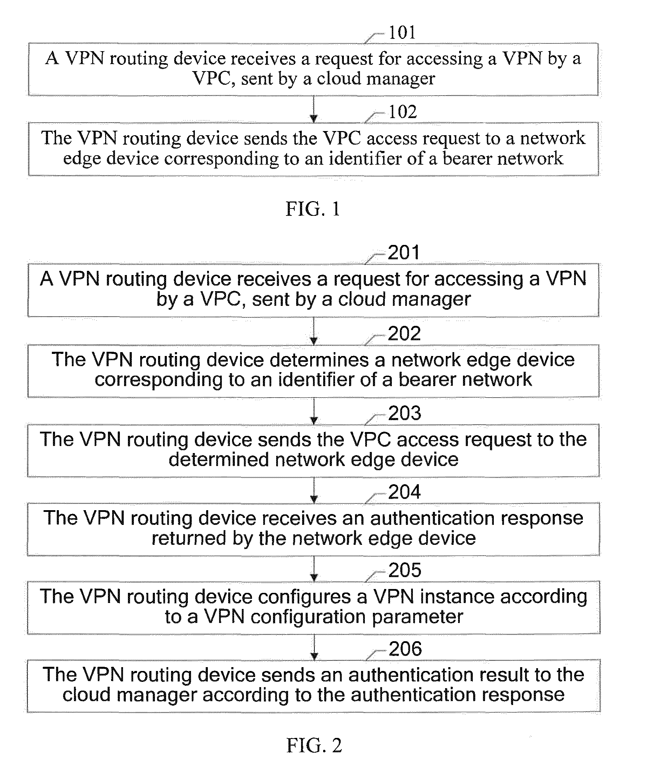

As shown in FIG. 1, it describes an embodiment of a method for authenticating access of a virtual private cloud VPC among the embodiments of the present invention. The method includes:

101: A VPN routing device receives a request for accessing a VPN by a VPC, sent by a cloud manager.

The VPN routing device receives the request for accessing a VPN by a VPC sent by the cloud manager; and in a scenario where a data center is connected to multiple bearer networks, or the data center is not directly connected to a bearer network of a target VPN, the request for accessing a VPN by a VPC carries an identifier of the bearer network of the target VPN and a VPN identifier, where the target VPN is a VPN which the VPC needs to access.

The VPN routing device may configure a VPN instance and execute a routing function in the VPN; the VPN routing device may be a DC gateway, a core router in the DC, a core switch in the DC, or a server in the DC; and a specific physical device for implementing the function of the VPN routing device may be determined according to situations and is not limited herein.

Specifically, if a VPC needs to be created, a user provides an identifier of a bearer network of a VPN (namely, the target VPN) which the VPC needs to access and a VPN identifier for the cloud manager by sending a VPC creation request to the cloud manager through a cloud service platform. The cloud manager will find a VPN routing device connected to the bearer network according to the identifier of the bearer network and send the request for accessing a VPN by a VPC to the VPN routing device, so that the VPN routing device initiates VPC access authentication to a corresponding network edge device.

102: The VPN routing device sends the VPC access request to a network edge device corresponding to the identifier of the bearer network.

The VPN routing device sends the VPC access request to a network edge device corresponding to the identifier of the bearer network, where the VPC access request carries the VPN identifier, so that the network edge device performs VPC access authentication according to the VPN identifier, where the VPC access request is a data packet encapsulated using an Internet Protocol IP routing protocol.

The VPN identifier is provided by the user, which is user information of the VPC access authentication, and may specifically be:
(1) a VPN user name, or
(2) a VPN user name and a password, or
(3) a VPN name, or
(4) a VPN name and a password.

As the VPN identifier relates to user information, in order to ensure security of the user information, when the VPC access request is encapsulated, the VPN routing device may use a challenge (challenge) mechanism to encrypt the VPN identifier.

In the embodiment of the present invention, a request for accessing a VPN by a VPC received by a VPN routing device carries an identifier of a bearer network of a target VPN, so that the VPN routing device may find an address of a corresponding network edge device (a network edge device using an IP routing protocol) according to the identifier of the bearer network, thereby realizing VPC access authentication over a layer-3 communication network, so that the network edge device can perform the VPC access authentication.

FIG. 2 describes in detail how to find a network edge device corresponding to an identifier of a bearer network of a target VPN. As shown in FIG. 2, another embodiment of a method for authenticating access of a virtual private cloud among the embodiments of the present invention includes:

201: A VPN routing device receives a request for accessing a VPN by a VPC, sent by a cloud manager.

The content of step 201 of this embodiment is the same as the content of step 101 of the embodiment shown in FIG. 1, and is not described in detail herein again.

202: The VPN routing device determines the network edge device corresponding to the identifier of the bearer network.

After receiving the request for accessing a VPN by a VPC, the VPN routing device extracts the identifier of the bearer network from the request for accessing a VPN by a VPC, and uses the identifier of the bearer network to determine the network edge device to which the VPC access request needs to be sent.

Alternatively, the identifier of the bearer network may be one or more of: a network edge device address, a bearer network name corresponding to the bearer network identifier, a bearer network number corresponding to the bearer network identifier, or a target autonomous system (AS, Autonomous System) number (one target AS number represents one autonomous domain) corresponding to the bearer network identifier.

If the identifier of the bearer network is a network edge device address, a network edge device corresponding to the network edge device address is the network edge device to which the VPC access request needs to be sent; and the network edge device address may be an IP address of the network edge device.

If the identifier of the bearer network is a bearer network name or a bearer network number, a corresponding network edge device may be searched for in a bearer network routing table stored by the VPN routing device; specifically, the VPN routing device may find the corresponding network edge device from the bearer network routing table according to the bearer network name or bearer network number.

If the identifier of the bearer network is a target AS number, a corresponding network edge device may be searched for in a bearer network routing table stored by the VPN routing device; specifically, the VPN routing device may search the bearer network routing table for the corresponding network edge device according to the target AS number; specifically, the target AS number may be configured manually or may be learned by the network device through self-learning.

The bearer network routing table is a routing table of reachable network devices between networks, and may be a manually configured routing table, for example: <destination network identifier, network edge device>. The destination network identifier may be an identifier that uniquely determines a bearer network, for example, one or more of: a bearer network name, a bearer network number, and an AS number. The bearer network routing table may also be a self-learned AS routing table. The AS routing table includes a route that is constructed on each autonomous system border router (ASBR, Autonomous System Border Router) and destined to an AS. A method for constructing an AS routing entry may be as follows: expanding a function of an ASBR, extracting an autonomous system path AS_PATH advertised by a border gateway protocol (BGP, Border Gateway Protocol) router, extracting an AS number of a reachable network belonged, and generating an AS routing entry destined to the target AS: <destination AS, next hop address, outbound interface>. In the bearer network routing table, different network edge devices belong to different bearer networks, and different network edge devices belong to autonomous domains of different autonomous systems. Therefore, a network edge device can be uniquely determined according to one or more of: the bearer network number, the bearer network name, and the target AS number.

203: The VPN routing device sends the VPC access request to the determined network edge device.

The VPN routing device sends the VPC access request to the determined network edge device, where the VPC access request carries the VPN identifier, so that the network edge device performs VPC access authentication according to the VPN identifier.

Alternatively, if the identifier of the bearer network is a network edge device address, the VPC access request is directly sent to the network edge device corresponding to the network edge device address.

Alternatively, if the identifier of the bearer network is a bearer network name, the VPC access request is sent to the network edge device which is found in the bearer network routing table according to the bearer network name.

Alternatively, if the identifier of the bearer network is a target AS number, the VPN routing device searches for a first network edge device at the next hop, and sends the VPC access request to the first network edge device, where the first network edge device is a network edge device which is on a path destined to the network edge device corresponding to the target AS number and is connected to the VPN routing device. Alternatively, the VPC access authentication request may also carry the target AS number; if the first network edge device is not the network edge device corresponding to the target AS number, the first network edge device determines a second network edge device at the next hop according to the bearer network routing table, and continues to forward the VPC access authentication request to the second network edge device until the VPC access authentication request is forwarded to the network edge device corresponding to the target AS number. The scenario where the identifier of the bearer network is a target AS number applies to transmission of the VPC access authentication request across multiple autonomous domains, so that the VPC access authentication can be performed across multiple networks. The bearer network routing table may be pre-configured on the first network edge device; alternatively, the first network edge device may learn the bearer network routing table by itself.

204: The VPN routing device receives an authentication response returned by the network edge device.

The VPN routing device receives the authentication response returned by the network edge device, where the authentication response carries a VPN configuration parameter.

Alternatively, the VPN configuration parameter includes a parameter for configuring a VPN instance, and the parameter for configuring a VPN instance may be a route target parameter. Alternatively, the VPN configuration parameter may further include an additional parameter, and the additional parameter may be one or more of: an access policy, an access bandwidth parameter, and a service priority parameter.

205: The VPN routing device configures a VPN instance according to the VPN configuration parameter.

After receiving the authentication response returned by the network edge device, if the authentication response indicates that the authentication is successful, the VPN routing device extracts the VPN configuration parameter carried in the authentication response, and configures the VPN instance according to the VPN configuration parameter.

Specifically, a layer-3 VPN (L3VPN) may be configured as follows: The VPN routing device extracts the route target (RT, Route Target) parameter from the VPN configuration parameter and configures virtual routing forwarding (VRF, Virtual Routing Forwarding): vpn-instance vpna; vpn-target 111:1 both. The layer-2 VPN (L2VPN) may be configured as follows: extracting the RT parameter, site id, site range, and offset, and configuring a virtual switch instance (VSI, Virtual Switch Instance).

Alternatively, if the VPN configuration parameter includes a quality of service (QoS, Quality of Service) parameter, and if the QoS parameter is an access bandwidth parameter, the VPN routing device may use the access bandwidth parameter to configure a bandwidth limit for the VPC to access the data center gateway; and if the QoS parameter is a service priority parameter, the VPN routing device may use the service priority parameter to configure a weight and/or an enqueue policy of a priority queue.

206: The VPN routing device sends an authentication result to the cloud manager according to the authentication response.

After receiving the authentication response returned by the network edge device, the VPN routing device sends the authentication result to the cloud manager according to the authentication response. When the VPC access authentication is successful, the cloud manager may create a VPC and bind the VPC to a VPN configured on the VPN routing device.

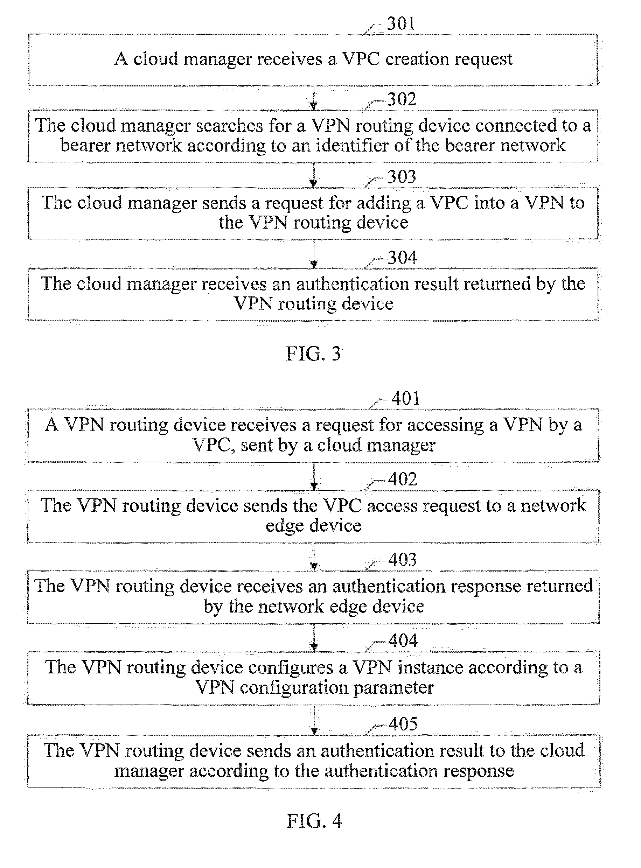

FIG. 3 describes a method for authenticating access of a virtual private cloud in the embodiment of the present invention from the perspective of a VPN routing device. The following describes a method for authenticating access of a virtual private cloud in the embodiment of the present invention from the perspective of a cloud manager. As shown in FIG. 3, it describes another embodiment of a method for authenticating access of a virtual private cloud among the embodiments of the present invention. The method includes:

301: The cloud manager receives a VPC creation request.

The cloud manager receives the VPC creation request, where the VPC creation request includes one or more of: an identifier of a bearer network of a target VPN and a VPN identifier, and the target VPN is a VPN which the VPC needs to access.

Specifically, if a VPC needs to be created, a user may send the VPC creation request to the cloud manager through a cloud service platform, where the VPC creation request carries the identifier of the bearer network of the target VPN and the VPN identifier required during VPC access authentication.

Alternatively, the VPN identifier may be:
(1) a VPN user name, or
(2) a VPN user name and a password, or
(3) a VPN name, or
(4) a VPN name and a password.

As the VPN identifier relates to user information, in order to ensure security of the user information, when the VPC access request is encapsulated, the VPN routing device may use a challenge mechanism to encrypt the VPN identifier.

Alternatively, the identifier of the bearer network may be one or more of: a network edge device address, a bearer network number, a bearer network name, and a target AS number.

302: The cloud manager searches for a VPN routing device connected to the bearer network according to the identifier of the bearer network.

After the cloud manager receives the VPC creation request, the cloud manager extracts the identifier of the bearer network carried in the VPC creation request and finds a VPN routing device connected to the bearer network corresponding to the identifier of the bearer network according to the identifier of the bearer network.

The cloud manager may find a VPN routing device connected to the bearer network corresponding to the identifier of the bearer network from the bearer network routing table stored locally on the cloud manager. Specifically, a path connected to a network edge device passes one unique VPN routing device; therefore, the cloud manager may uniquely determine a VPN routing device according to one or more of: the network edge device address, bearer network number, bearer network name, and target AS number.

303: The cloud manager sends a request for adding a VPC into a VPN to the VPN routing device.

The cloud manager sends the request for adding a VPC into a VPN to the found VPN routing device, where the request for accessing a VPN by a VPC carries an identifier of a bearer network of a target VPN and a VPN identifier; the VPN routing device may use the VPN identifier to initiate VPC access authentication to a network edge device corresponding to the identifier of the bearer network.

Alternatively, if the identifier of the bearer network is one or more of: a bearer network number, a bearer network name, and a target AS number, the cloud manager may find a network edge device that needs access authentication from a locally stored bearer network routing table using one or more of: the bearer network number, the bearer network name, and the target AS number; and when the request for adding a VPC into a VPN is sent to the VPN routing device, the request for adding a VPC into a VPN may be made to directly include an address of the network edge device.

304: The cloud manager receives an authentication result returned by the VPN routing device.

The cloud manager receives the authentication result returned by the VPN routing device; if the authentication result indicates success, the cloud manager creates a VPC in the VPN routing device and binds the VPC to a VPN configured on the VPN routing device.

In a scenario where a data center is directly connected to only one bearer network of a target VPN, the embodiment of the present invention provides a corresponding solution. As shown in FIG. 4, another embodiment of a method for authenticating access of a virtual private cloud among the embodiments of the present invention includes:

401: A VPN routing device receives a request for accessing a VPN by a VPC, sent by a cloud manager.

The VPN routing device receives the request for accessing a VPN by a VPC sent by the cloud manager; in a scenario where a data center is directly connected to only one bearer network of a target VPN, the request for accessing a VPN by a VPC carries a VPN identifier of the target VPN; and the target VPN is a VPN which the VPC needs to access, and the target VPN corresponds to a unique network edge device.

The VPN routing device may configure a VPN instance and may execute a routing function in the VPN. The VPN routing device may be a DC gateway, a core router in the DC, a core switch in the DC, or a server in the DC; and a specific physical device for implementing the function of the VPN routing device may be determined according to situations, and is not limited herein.

Specifically, if, in a scenario where the data center is directly connected to only one bearer network of the target VPN, a VPC needs to be created, a user provides a VPC identifier for the cloud manager by sending the VPC creation request to the cloud manager through a cloud service platform; and after receiving the VPC creation request, the cloud manager directly sends a request for accessing a VPN by a VPC to the VPN routing device connected to the bearer network, so that the VPN routing device initiates VPC access authentication to a corresponding network edge device.

402: The VPN routing device sends the VPC access request to the network edge device.

The VPN routing device sends the VPC access request to the unique network edge device corresponding to the target VPN, where the VPC access request carries the VPN identifier, so that the network edge device performs VPC access authentication according to the VPN identifier; and the VPC access request is a data packet encapsulated using an IP routing protocol.

The VPN identifier is provided by the user and is user information for the VPC access authentication. The VPN identifier may be:
(1) a VPN user name, or
(2) a VPN user name and a password, or
(3) a VPN name, or
(4) a VPN name and a password.

As the VPN identifier relates to user information, in order to ensure security of the user information, when the VPC access request is encapsulated, the VPN routing device may use a challenge mechanism to encrypt the VPN identifier.

403: The VPN routing device receives an authentication response returned by the network edge device.

The VPN routing device receives the authentication response returned by the network edge device, where the authentication response carries a VPN configuration parameter.

Alternatively, the VPN configuration parameter includes a parameter for configuring a VPN instance, and the parameter for configuring a VPN instance may be a route target parameter. The VPN configuration parameter may further include an additional parameter, and the additional parameter may be one or more of: an access policy, an access bandwidth parameter, and a service priority parameter.

404: The VPN routing device configures a VPN instance according to the VPN configuration parameter.

After receiving the authentication response returned by the network edge device, if the authentication response indicates that the authentication is successful, the VPN routing device extracts the VPN configuration parameter carried in the authentication response, and configures the VPN instance according to the VPN configuration parameter.

Alternatively, if the VPN configuration parameter includes a quality of service (QoS, Quality of Service) parameter, and if the QoS parameter is an access bandwidth parameter, the VPN routing device may use the access bandwidth parameter to configure a bandwidth limit for the VPC to access the data center gateway; and if the QoS parameter is a service priority parameter, the VPN routing device may use the service priority parameter to configure a weight and/or an enqueue policy of a priority queue.

405: The VPN routing device sends an authentication result to the cloud manager according to the authentication response.

After receiving the authentication response returned by the network edge device, the VPN routing device sends the authentication result to the cloud manager according to the authentication response. When the VPC access authentication is successful, the cloud manager may create a VPC and bind the VPC to a VPN configured on the VPN routing device.

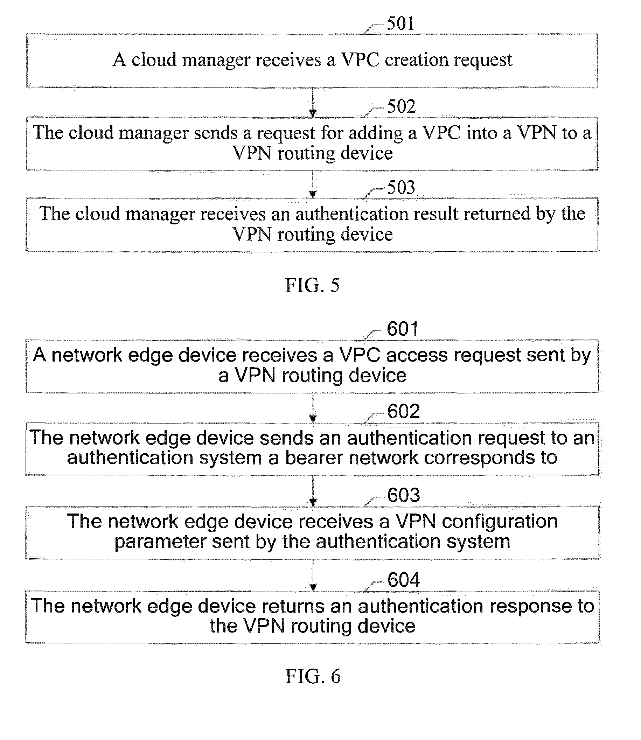

FIG. 5 describes in detail a method for authenticating access of a virtual private cloud in a scenario where a data center is directly connected to only one bearer network of a target VPN from the perspective of a cloud manager. As shown in FIG. 5, another embodiment of a method for authenticating access of a virtual private cloud among the embodiments of the present invention includes:

501: The cloud manager receives a VPC creation request.

The cloud manager receives the VPC creation request, where the VPC creation request includes a VPN identifier of the target VPN, the target VPN is a VPN which the VPC needs to access, and the target VPN corresponds to a unique bearer network.

Specifically, if a VPC needs to be created, a user may send a VPC creation request to the cloud manager through a cloud service platform, where the VPC creation request carries the VPN identifier of the target VPN required during VPC access authentication.

Alternatively, the VPN identifier may be:
(1) a VPN user name, or
(2) a VPN user name and a password, or
(3) a VPN name, or
(4) a VPN name and a password.

As the VPN identifier relates to user information, in order to ensure security of the user information, when the VPC access request is encapsulated, a VPN routing device may use a challenge mechanism to encrypt the VPN identifier.

502: The cloud manager sends a request for adding a VPC into a VPN to the VPN routing device.

The cloud manager sends the request for adding a VPC into a VPN to the VPN routing device connected to the bearer network, where the request for accessing a VPN by a VPC carries the VPN identifier of the target VPN; and the VPN routing device may use the VPN identifier to initiate VPC access authentication to the network edge device corresponding to the identifier of the bearer network.

Alternatively, if the VPN routing device is a DC gateway, a core router in the DC, or a core switch in the DC, the target VPN and the DC gateway, or the target VPN and the core router in the DC, or the target VPN and the core switch in the DC are in one-to-one correspondence relationship (that is, the target VPN is connected to a unique VPN routing device). The cloud manager may find the unique VPN routing device that is connected to the bearer network and corresponds to the target VPN. If the VPN routing device is a server in the DC, and there may be multiple such servers, the cloud manager may select, according to a pre-configured policy, one or more servers as a VPN routing device for transmission; and the pre-configured policy may be a load sharing policy and may also be a load limiting policy (that is, the servers are used sequentially in load ranges of the servers).

503: The cloud manager receives an authentication result returned by the VPN routing device.

The cloud manager receives the authentication result returned by the VPN routing device. If the authentication result indicates that the authentication is successful, the cloud manager creates a VPC in the VPN routing device and binds the VPC to a VPN configured on the VPN routing device.

FIG. 6 describes a method for authenticating access of a virtual private cloud in the embodiment of the present invention from the perspective of a network edge device. As shown in FIG. 6, another embodiment of a method for authenticating access of a virtual private cloud among the embodiments of the present invention includes:

601: The network edge device receives a VPC access request sent by a VPN routing device.

The network edge device receives the VPC access request sent by the VPN routing device, where the VPC access request carries a VPN identifier of a target VPN.

Alternatively, the VPN identifier may be:
(1) a VPN user name, or
(2) a VPN user name and a password, or
(3) a VPN name, or
(4) a VPN name and a password.

As the VPN identifier relates to user information, in order to ensure security of the user information, when the VPC access request is encapsulated, the VPN routing device may use a challenge mechanism to encrypt the VPN identifier.

The network edge device may be an ASBR or a PE.

602: The network edge device sends an authentication request to an authentication system a bearer network corresponds to.

The network edge device sends the authentication request to the authentication system the bearer network of the target VPN corresponds to, where the authentication request carries the VPN identifier, so that the authentication system authenticates the VPN identifier; and the target VPN is a VPN which the VPC needs to access.

Alternatively, if the VPC access authentication process in the embodiment of the present invention requires transmission across multiple networks, the network edge device may determine whether the local network edge device is a target network edge device of the VPC access request according to an identifier of the bearer network (for example: a target AS number) after receiving the VPC access request sent by the VPN routing device and before sending the authentication request to the authentication system the bearer network of the target VPN corresponds to, and if not, the network edge device may determine a network edge device at the next hop according to a bearer network routing table, and continue to forward the VPC access authentication request to a second network edge device at the next hop until the VPC access authentication request is forwarded to the target network edge device. Specifically, the identifier of the bearer network may be carried in the VPC access request, and the bearer network routing table may be learned by the network edge device through self-learning.

603: The network edge device receives a VPN configuration parameter sent by the authentication system.

After sending the authentication request to the authentication system the bearer network of the target VPN corresponds to, the network edge device receives the VPN configuration parameter sent by the authentication system.

Alternatively, after receiving the VPN configuration parameter sent by the authentication system, the network edge device extracts a VPN access parameter from the VPN configuration parameter, and if the VPN access parameter is an RT parameter, the network edge device adds the RT parameter into an outbound route filtering list (ORF, Outbound Route Filtering), indicating that the VPN routing table in the bearer network may be forwarded to the VPN routing device.

Alternatively, after receiving the VPN configuration parameter sent by the authentication system, the network edge device may also extract an access bandwidth parameter from the VPN configuration parameter and configure an access bandwidth limit according to the access bandwidth parameter.

604: The network edge device returns an authentication response to the VPN routing device.

The network edge device returns the authentication response to the VPN routing device, where the authentication response carries the VPN configuration parameter, so that the VPN routing device configures a VPN instance according to the VPN configuration parameter.

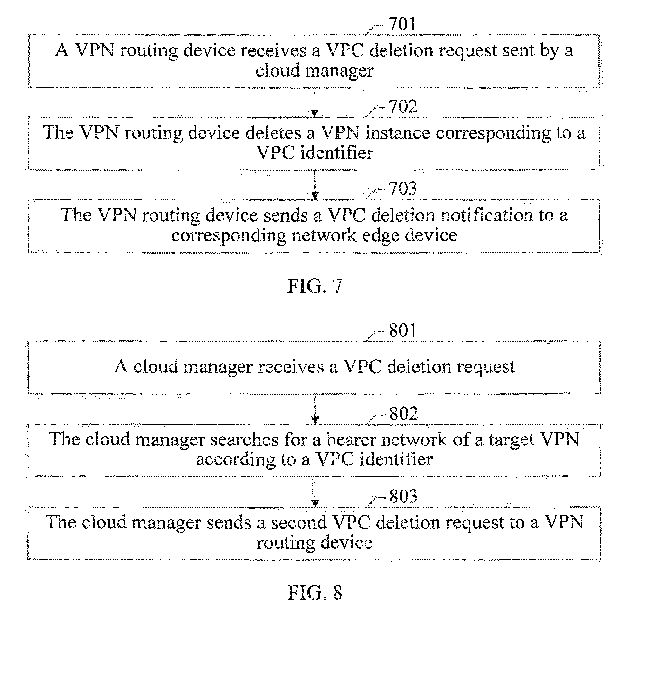

Drawings prior to FIG. 7 describe a VPC access authentication process in the embodiments of the present invention. The following describes a VPC deletion process in the embodiments of the present invention. As shown in FIG. 7, an embodiment of a method for deleting a virtual private cloud among the embodiments of the present invention includes:

701: A VPN routing device receives a VPC deletion request sent by a cloud manager.

The VPN routing device receives the VPC deletion request sent by the cloud manager, where the VPC deletion request carries a network edge device address of a bearer network of a target VPN and a VPC identifier.

The VPN routing device is a device which may configure a VPN instance and execute a routing function in the VPN; the VPN routing device may be a DC gateway, a core router in the DC, a core switch in the DC, or a server in the DC; and a specific physical device for implementing the function of the VPN routing device may be determined according to situations and is not limited herein.

In the embodiment of the present invention, the VPC identifier is an identifier of a VPC to be deleted, and the target VPN is a VPN accessed by the VPC, to be deleted.

702: The VPN routing device deletes a VPN instance corresponding to the VPC identifier.

The VPN routing device deletes the VPN instance corresponding to the VPC identifier. Alternatively, the VPC identifier may be a VPC number allocated by the cloud manager and may also be a VPN instance name. The VPN routing device can locally find a unique VPN instance corresponding to the VPC identifier according to the VPC identifier.

703: The VPN routing device sends a VPC deletion notification to a corresponding network edge device.

The VPN routing device sends the VPC deletion notification to the network edge device corresponding to the network edge device address, where the VPC deletion notification carries the VPC identifier, so that the network edge device notifies an authentication system of deleting related authentication information corresponding to the VPC identifier; and the authentication system corresponds to the bearer network.

Specifically, in the access authentication process, the network edge device receives the authentication request and initiates RADIUS authentication, where one VPC identifier corresponds to one network access system (NAS, Network Access System) port (port) number; and the network edge device will establish a correspondence relationship between the VPC identifier and the RADIUS authentication, namely, a correspondence relationship between the VPC identifier and an NAS port number. In a VPC deletion process, the network edge device may notify the corresponding authentication system of deleting an access authentication record corresponding to the VPC according to the VPC identifier.

The drawing prior to FIG. 8 describes the virtual private cloud deletion method in the embodiment of the present invention from the perspective of a VPN routing device; and the following describes a method for deleting a virtual private cloud in the embodiment of the present invention from the perspective of a cloud manager. As shown in FIG. 8, another embodiment of a method for deleting a virtual private cloud among the embodiments of the present invention includes:

801: The cloud manager receives a VPC deletion request.

The cloud manager receives a first VPC deletion request, where the first VPC deletion request carries a VPC identifier; specifically, the first VPC deletion request may be sent by a user to the cloud manager through a cloud service platform, and the VPC identifier is an identifier of a VPC to be deleted.

802: The cloud manager searches for a bearer network of a target VPN according to the VPC identifier.

The cloud manager searches for the bearer network of the target VPN according to the VPC identifier and determines a VPN routing device connected to the bearer network and a network edge device address, where the target VPN is a VPN that is accessed by the VPC and to be deleted.

In an authentication process, the related configurations of the VPC and the VPN are bound; therefore, the cloud manager may find the bearer network of the target VPN according to the VPC identifier and find the VPN routing device connected to the bearer network and the network edge device address.

803: The cloud manager sends a second VPC deletion request to the VPN routing device.

The cloud manager sends the second VPC deletion request to the VPN routing device, where the second VPC deletion request carries the network edge device address and the VPC identifier, so that the VPN routing device sends a VPC deletion request to a network edge device corresponding to the network edge device address, thereby deleting related configuration information of the VPC from an authentication system of the corresponding bearer network.

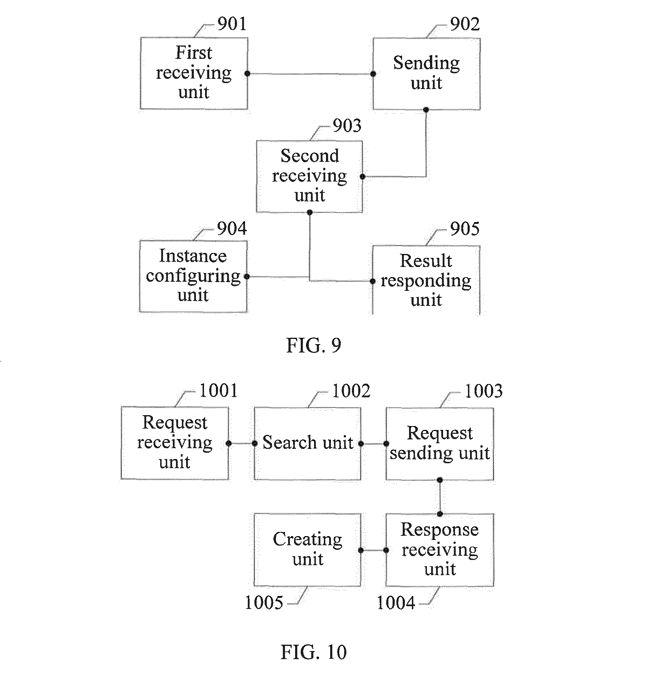

The following describes an embodiment of a VPN routing device in the present invention used for executing the method for authenticating access of a virtual private cloud. For the structure thereof, reference may be made to FIG. 9. An embodiment of the VPN routing device among the embodiments of the present invention includes a first receiving unit 901 and a sending unit 902, where:
the first receiving unit 901 is configured to receive a request for accessing a virtual private network VPN by a virtual private cloud VPC, sent by a cloud manager, where the request for accessing a VPN by a VPC carries an identifier of a bearer network of a target VPN and a VPN identifier; and
the sending unit 902 is configured to send the VPC access request to a network edge device corresponding to the identifier of the bearer network, where the VPC access request carries the VPN identifier, so that the network edge device performs VPC access authentication according to the VPN identifier.

Alternatively, the VPN routing device according to the embodiment of the present invention may further include a second receiving unit 903, an instance configuring unit 904, and a result responding unit 905, where:
the second receiving unit 903 is configured to receive an authentication response returned by the network edge device;
the instance configuring unit 904 is configured to, if the authentication response indicates success, extract a VPN configuration parameter carried in the authentication response and configure a VPN instance according to the VPN configuration parameter; and
the result responding unit 905 is configured to send an authentication result to the cloud manager according to the authentication response.

Specific operation processes of the units in the VPN routing device according to the embodiment of the present invention are as follows:
The first receiving unit 901 receives a request for accessing a VPN by a VPC sent by the cloud manager; and in a scenario where a data center is connected to multiple bearer networks, or the data center is not directly connected to a bearer network of a target VPN, the request for accessing a VPN by a VPC carries an identifier of a bearer network of a target VPN and a VPN identifier, where the target VPN is a VPN which the VPC needs to access.

Specifically, if a VPC needs to be created, a user will provide the identifier of the bearer network of the VPN which the VPC needs to access (namely, the target VPN) and the VPN identifier for the cloud manager by sending a VPC creation request to the cloud manager through a cloud service platform; and the cloud manager will find a VPN routing device connected to the bearer network according to the identifier of the bearer network, and send a request for accessing a VPN by a VPC to the VPN routing device, so that the VPN routing device initiates VPC access authentication to the corresponding network edge device.

After the request for accessing a VPN by a VPC is received, the sending unit 902 sends the VPC access request to the network edge device corresponding to the identifier of the bearer network, where the VPC access request carries the VPN identifier, so that the network edge device performs VPC access authentication according to the VPN identifier; and the VPC access request is a data packet encapsulated using an IP routing protocol.

Alternatively, the identifier of the bearer network may be one or more of: a network edge device address, a bearer network number, a bearer network name, and a target AS number, where one target AS number represents one autonomous domain.

If the identifier of the bearer network is a network edge device address, it is determined that the network edge device corresponding to the network edge device address is a network edge device to which the VPC access request needs to be sent, and the VPC access request is directly sent to the network edge device corresponding to the network edge device address; and the network edge device address may be an IP address of the network edge device.

If the identifier of the bearer network is a bearer network name or a bearer network number, a corresponding network edge device may be searched for in a bearer network routing table stored by the VPN routing device, and the sending unit 902 sends the VPC access request to the network edge device found in the bearer network routing table.

If the identifier of the bearer network is a target AS number, a corresponding network edge device may be searched for in a bearer network routing table stored by the VPN routing device; specifically, the VPN routing device may search for the corresponding network edge device in the bearer network routing table according to the target AS number; the sending unit 902 searches for a first network edge device at the next hop, and sends the VPC access request to the first network edge device, where the first network edge device is a network edge device which is connected to the VPN routing device on a path destined to the network edge device corresponding to the target AS number; the VPC access authentication request further carries the target AS number; if the first network edge device is not the network edge device corresponding to the target AS number, the first network edge device determines a second network edge device at the next hop according to the bearer network routing table, and continues to forward the VPC access authentication request to the second network edge device until the VPC access authentication request is forwarded to the network edge device corresponding to the target AS number; the bearer network routing table may be pre-configured on the first network edge device; alternatively, the first network edge device learns the bearer network routing table through self-learning.

The bearer network routing table is a routing table of reachable network devices between networks, and may be a manually configured routing table, for example: <destination network identifier, network edge device>. The destination network identifier may be an identifier that uniquely determines a bearer network, for example, one or more of: a bearer network name, a bearer network number, and an AS number. The bearer network routing table may also be a self-learned AS routing table. The AS routing table includes routes that are constructed on each ASBR and destined to ASs. A method for constructing an AS routing entry may be as follows: expanding a function of an ASBR, extracting AS_PATH advertised by a BGP router, extracting an AS number of a reachable network belonged, and generating an AS routing entry destined to the target AS: <destination AS, next hop address, outbound interface>. In the bearer network routing table, different network edge devices belong to different bearer networks, and different network edge devices belong to autonomous domains of different autonomous systems. Therefore, a network edge device can be uniquely determined according to one or more of: the bearer network number, the bearer network name, and the target AS number.

The VPN identifier is provided by the user and is user information for the VPC access authentication. The VPN identifier may be:
(1) a VPN user name, or
(2) a VPN user name and a password, or
(3) a VPN name, or
(4) a VPN name and a password.

As the VPN identifier relates to user information, in order to ensure security of the user information, when the VPC access request is encapsulated, the VPN routing device may use a challenge mechanism to encrypt the VPN identifier.

After the VPC access request is sent to the network edge device, the second receiving unit 903 receives an authentication response returned by the network edge device, where the authentication response carries a VPN configuration parameter.

Alternatively, the VPN configuration parameter includes a parameter for configuring a VPN instance, and the parameter for configuring a VPN instance may be a route target parameter. The VPN configuration parameter may further include an additional parameter, and the additional parameter may be one or more of: an access policy, an access bandwidth parameter, and a service priority parameter.

After the authentication response returned by the network edge device is received, if the authentication response indicates success, the instance configuring unit 904 extracts the VPN configuration parameter carried in the authentication response and configures a VPN instance according to the VPN configuration parameter.

Specifically, a layer-3 VPN (L3VPN) may be configured as follows: The VPN routing device extracts the route target (RT, Route Target) parameter from the VPN configuration parameter and configures virtual routing forwarding (VRF, Virtual Routing Forwarding): *vpn-instance vpna; vpn-target 111:1 both.* A layer-2 VPN (L2VPN) may be configured as follows: An RT parameter, a site id, a site range, and an offset are extracted, and a virtual switch instance (VSI, Virtual Switch Instance) is configured.

Alternatively, if the VPN configuration parameter includes a quality of service (QoS, Quality of Service) parameter, and if the QoS parameter is an access bandwidth parameter, the VPN routing device may use the access bandwidth parameter to configure a bandwidth limit for the VPC to access the data center gateway; and if the QoS parameter is a service priority parameter, the VPN routing device may use the service priority parameter to configure one or more of: a weight and an enqueue policy of a priority queue.

After the authentication response returned by the network edge device is received, the result responding unit 905 may send an authentication result to the cloud manager according to the authentication response. When the VPC access authentication is successful, the cloud manager may create a VPC and bind the VPC to a VPN configured on the VPN routing device.

The following describes an embodiment of a cloud manager in the present invention used for executing the method for authenticating access of a virtual private cloud. For the structure thereof, reference may be made to FIG. 10. An embodiment of the cloud manager among the embodiments of the present invention includes a request receiving unit 100 1, a search unit 1002, and a request sending unit 1003, where:
the request receiving unit 1001 is configured to receive a VPC creation request, where the VPC creation request includes: an identifier of a bearer network of a target VPN and a VPN identifier;
the search unit 1002 is configured to search for a VPN routing device connected to the bearer network according to the identifier of the bearer network; and
the request sending unit 1003 is configured to send a request for adding a VPC into a VPN to the VPN routing device, where the request for accessing a VPN by a VPC carries the identifier of the bearer network and the VPN identifier, so that the VPN routing device uses the VPN identifier to initiate VPC access authentication to a network edge device corresponding to the identifier of the bearer network.

Alternatively, the cloud manager in the embodiment of the present invention may further include a response receiving unit 1004 and a creating unit 1005, where:
the response receiving unit 1004 is *configured to receive an authentication result returned by the VPN routing device; and
the creating unit 1005 is configured to: if the authentication result indicates success, the cloud manager creates a VPC in the VPN routing device and binds the VPC to a VPN configured on the VPN routing device.

Specific operation processes of the units in the cloud manager according to the embodiment of the present invention are as follows:

The request receiving unit 1001 receives a VPC creation request, where the VPC creation request includes an identifier of a bearer network of a target VPN and a VPN identifier, and the target VPN is a VPN which the VPC needs to access.

If a VPC needs to be created, a user may send the VPC creation request to the cloud manager through a cloud service platform, where the VPC creation request carries the identifier of the bearer network of the target VPN and the VPN identifier required during VPC access authentication.

Alternatively, the VPN identifier may be:
(1) a VPN user name, or
(2) a VPN user name and a password, or
(3) a VPN name, or
(4) a VPN name and a password.

As the VPN identifier relates to user information, in order to ensure security of the user information, when the VPC access request is encapsulated, the VPN routing device may use a challenge mechanism to encrypt the VPN identifier.

Alternatively, the identifier of the bearer network may be one or more of: a network edge device address, a bearer network number, a bearer network name, and a target AS number.

After the VPC creation request is received, the search unit 1002 extracts the identifier of the bearer network carried in the VPC creation request, and finds a VPN routing device connected to the bearer network according to the identifier of the bearer network. Specifically, a path for connecting to a network edge device passes one unique VPN routing device; therefore, the search unit 1002 may determine a unique VPN routing device according to one or more of: the network edge device address, the bearer network number, the bearer network name, and the target AS number.

After the VPN routing device is determined, the request sending unit 1003 sends a request for adding a VPC into a VPN to the found VPN routing device, where the request for accessing a VPN by a VPC carries the identifier of the bearer network of the target VPN and the VPN identifier, so that the VPN routing device uses the VPN identifier to initiate VPC access authentication to the network edge device corresponding to the identifier of the bearer network.

Alternatively, if the identifier of the bearer network is one or more of: the bearer network number, the bearer network name, and the target AS number, the cloud manager may find, according to one or more of: the bearer network number, the bearer network name, and the target AS number, a network edge device that requires access authentication from a bearer network routing table locally stored on the cloud manager; and when a request for adding a VPC into a VPN is sent to the VPN routing device, the request for adding a VPC into a VPN may be made to directly carry the address of the network edge device. The address of the network edge device may be an IP address of the network edge device.

After the request for adding a VPC into a VPN is sent to the VPN routing device, the response receiving unit 1004 receives an authentication result returned by the VPN routing device; and if the authentication result indicates success, the creating unit 1005 creates a VPC in the VPN routing device and binds the VPC to a VPN configured on the VPN routing device.

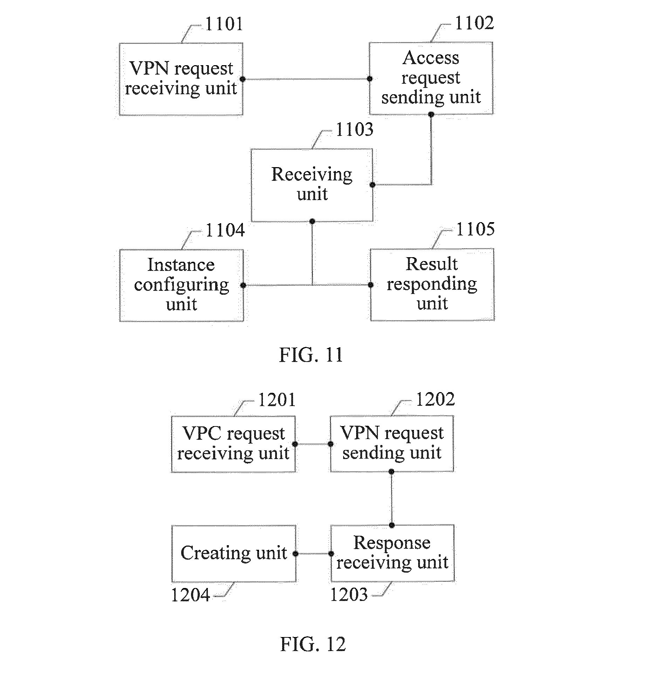

FIG. 11 describes an embodiment of a VPN routing device of the present invention in a scenario where a data center is directly connected to only one bearer network of a target VPN. For the structure thereof, reference may be made to FIG. 11. Another embodiment of the VPN routing device among the embodiments of the present invention includes a VPN request receiving unit 1101 and an access request sending unit 1102, where:
the VPN request receiving unit 1101 is configured to receive a request for accessing a VPN by a VPC, sent by a cloud manager, where the request for accessing a VPN by a VPC carries a VPN identifier of a target VPN, and the target VPN corresponds to a unique network edge device;
   and
the access request sending unit 1102 is configured to send the VPC access request to the network edge device, where the VPC access request carries the VPN identifier, so that the network edge device performs VPC access authentication according to the VPN identifier.

Alternatively, the VPN routing device according to the embodiment of the present invention may further include a receiving unit 1103, an instance configuring unit 1104, and a result responding unit 1105, where:
the receiving unit 1103 is configured to receive an authentication response returned by the network edge device;
the instance configuring unit 1104 is configured to, if the authentication response indicates success, extract a VPN configuration parameter carried in the authentication response and configure a VPN instance according to the VPN configuration parameter; and
the result responding unit 1105 is configured to send an authentication result to the cloud manager according to the authentication response.

Specific operation processes of the units in the VPN routing device according to the embodiment of the present invention are as follows:

The VPN request receiving unit 1101 receives a request for accessing a VPN by a VPC sent by the cloud manager; in the scenario where the data center is directly connected to only one bearer network of the target VPN, the request for accessing a VPN by a VPC carries a VPN identifier of the target VPN; and the target VPN is a VPN which the VPC needs to access, and the target VPN corresponds to a unique network edge device.

After receiving the request for accessing a VPN by a VPC, the access request sending unit 1102 sends the VPC access request to the unique network edge device corresponding to the target VPN, where the VPC access request carries the VPN identifier, so that the network edge device performs VPC access authentication according to the VPN identifier; and the VPC access request is a data packet encapsulated using an IP routing protocol.

After the VPC access request is sent, the receiving unit 1103 receives an authentication response returned by the network edge device, where the authentication response carries a VPN configuration parameter; and if the authentication response indicates that the authentication is successful, the instance configuring unit 1104 extracts the VPN configuration parameter carried in the authentication response and configures a VPN instance according to the VPN configuration parameter. Moreover, the result responding unit 1105 may also send an authentication result to the cloud manager according to the authentication response. When the VPC access authentication is successful, the cloud manager may create a VPC and bind the VPC to a VPN configured on the VPN routing device.

FIG. 12 describes an embodiment of a cloud manager of the present invention in a scenario where the data center is directly connected to only one bearer network of a target VPN. For the structure thereof, reference may be made to FIG. 12. Another embodiment of the cloud manager among the embodiments of the present invention includes a VPC request receiving unit 1201 and a VPN request sending unit 1202, where:
the VPC request receiving unit 1201 is configured to receive a VPC creation request, where the VPC creation request includes a VPN identifier of a target VPN, and the target VPN corresponds to a unique bearer network; and
the VPN request sending unit 1202 is configured to send a request for adding a VPC into a VPN to a VPN routing device connected to the bearer network, where the request for accessing a VPN by a VPC carries the VPN identifier, so that the VPN routing device uses the VPN identifier to initiate VPC access authentication to a network edge device.

Alternatively, the cloud manager in the embodiment of the present invention may further include a response receiving unit 1203 and a creating unit 1204, where:
the response receiving unit 1203 is configured to receive an authentication result returned by the VPN routing device; and
the creating unit 1204 is configured to: if the authentication result indicates success, the cloud manager creates a VPC in the VPN routing device and binds the VPC to a VPN configured on the VPN routing device.

Specific operation processes of the units in the cloud manager according to the embodiment of the present invention are as follows:

The VPC request receiving unit 1201 receives a VPC creation request, where the VPC creation request includes a VPN identifier of a target VPN, the target VPN is a VPN which the VPC needs to access, and the target VPN corresponds to a unique bearer network.

Specifically, if a VPC needs to be created, a user may send a VPC creation request to the cloud manager through a cloud service platform, where the VPC creation request carries the VPN identifier of the target VPN required during VPC access authentication.

Alternatively, the VPN identifier may be:
(1) a VPN user name, or
(2) a VPN user name and a password, or
(3) a VPN name, or
(4) a VPN name and a password.

As the VPN identifier relates to user information, in order to ensure security of the user information, when the VPC access request is encapsulated, the VPN routing device may use a challenge mechanism to encrypt the VPN identifier.

After the VPC creation request is received, the VPN request sending unit 1202 sends a request for adding a VPC into a VPN to a VPN routing device connected to the bearer network, where the request for accessing a VPN by a VPC carries the VPN identifier of the target VPN, so that the VPN routing device uses the VPN identifier to initiate VPC access authentication to the network edge device corresponding to the identifier of the bearer network.

After the request for adding a VPC into a VPN is sent, the response receiving unit 1203 receives an authentication result returned by the VPN routing device; and if the authentication result indicates success, the creating unit 1204 creates a VPC in the VPN routing device and binds the VPC to a VPN configured on the VPN routing device.

FIG. 13 describes an embodiment of a network edge device of the present invention for executing the method for authenticating access of a virtual private cloud. For the structure thereof, reference may be made to FIG. 13. An embodiment of the network edge device among the embodiments of the present invention includes an access request receiving unit 1301, an authentication request sending unit 1302, and an authentication responding unit 1303, where:
the access request receiving unit 1301 is configured to receive a VPC access request sent by a VPN routing device, where the VPC access request carries a VPN identifier of a target VPN;
the authentication request sending unit 1302 is configured to send an authentication request to an authentication system a bearer network of the target VPN corresponds to, where the authentication request carries the VPN identifier, so that the authentication system authenticates the VPN identifier; and
the authentication responding unit 1303 is configured to: if the authentication is successful, the network edge device receives a VPN configuration parameter sent by the authentication system and returns an authentication response to the VPN routing device, where the authentication response carries the VPN configuration parameter.

Alternatively, the network edge device in the embodiment of the present invention may further include a first configuring unit 1304 and a second configuring unit 1305, where:
the first configuring unit 1304 is configured to extract a VPN access parameter from the VPN configuration parameter and add the VPN access parameter into an outbound route filtering list ORF, indicating that a VPN routing table in the bearer network may be forwarded to the VPN routing device; and
the second configuring unit 1305 is configured to extract an access bandwidth parameter from the VPN configuration parameter and configure an access bandwidth limit according to the access bandwidth parameter.

Specific operation processes of the units in the network edge device according to the embodiment of the present invention are as follows:

The access request receiving unit 1301 receives a VPC access request sent by the VPN routing device, where the VPC access request carries a VPN identifier of a target VPN.

Alternatively, the VPN identifier may be:
(1) a VPN user name, or
(2) a VPN user name and a password, or
(3) a VPN name, or
(4) a VPN name and a password.

As the VPN identifier relates to user information, in order to ensure security of the user information, when the VPC access request is encapsulated, the VPN routing device may use a challenge mechanism to encrypt the VPN identifier.

The authentication request sending unit 1302 sends an authentication request to an authentication system the bearer network of the target VPN corresponds to, where the authentication request carries the VPN identifier, so that the authentication system authenticates the VPN identifier; and the target VPN is a VPN which the VPC needs to access.

Alternatively, if the VPC access authentication process in the embodiment of the present invention requires transmission across multiple networks, the network edge device needs to determine whether the local network edge device is a target network edge device of the VPC access request according to an identifier of the bearer network (for example, a target AS number) after receiving the VPC access request sent by the VPN routing device and before sending the authentication request to the authentication system the bearer network of the target VPN corresponds to, and if not, the network edge device determines a network edge device at the next hop according to a bearer network routing table, and continues to forward the VPC access authentication request to a second network edge device at the next hop until the VPC access authentication request is forwarded to the target network edge device. Specifically, the identifier of the bearer network may be carried in the VPC access request, and the bearer network routing table may be learned by the network edge device through self-learning.

If, after the authentication request is sent to the authentication system the bearer network of the target VPN corresponds to, the authentication is successful, the authentication responding unit 1303 receives a VPN configuration parameter returned by the authentication system.

Alternatively, after the VPN configuration parameter sent by the authentication system is received, the first configuring unit 1304 may extract the VPN access parameter, such as an RT parameter, from the VPN configuration parameter, and add the RT parameter into an outbound route filtering list (ORF, Outbound Route Filtering), indicating that a VPN routing table in the bearer network may be forwarded to the VPN routing device.

Alternatively, after the VPN configuration parameter sent by the authentication system is received, the second configuring unit 1305 may further extract an access bandwidth parameter from the VPN configuration parameter and configure an access bandwidth limit according to the access bandwidth parameter.

FIG. 14 describes an embodiment of a VPN routing device of the present invention for executing the virtual private cloud deletion method. For the structure thereof, reference may be made to FIG. 14. Another embodiment of the VPN routing device among the embodiments of the present invention includes a deletion request receiving unit 1401, an instance deleting unit 1402, and a notification sending unit 1403, where:
the deletion request receiving unit 1401 is configured to receive a VPC deletion request sent by a cloud manager, where the VPC deletion request carries a network edge device address of a bearer network of a target VPN and a VPC identifier;
the instance deleting unit 1402 is configured to delete a VPN instance corresponding to the VPC identifier; and
the notification sending unit 1403 is configured to send a VPC deletion notification to a network edge device corresponding to the network edge device address, where the VPC deletion notification carries the VPC identifier, so that the network edge device notifies an authentication system of deleting related authentication information corresponding to the VPC identifier.

Specific operation processes of the units in the VPN routing device according to the embodiment of the present invention are as follows:

The deletion request receiving unit 1401 receives a VPC deletion request sent by a cloud manager, where VPC, deletion request carries a network edge device address of a bearer network of a target VPN and a VPC identifier.

After a VPC deletion request is received, the instance deleting unit 1402 deletes a VPN instance corresponding to the VPC identifier. Alternatively, the VPC identifier may also be a VPC number allocated by the cloud manager, or may be a VPN instance name; and the VPN routing device can find a unique VPN instance corresponding to the VPC identifier locally according to the VPC identifier.

After the VPC deletion request is received, the notification sending unit 1403 sends a VPC deletion notification to the network edge device corresponding to the network edge device address, where the VPC deletion notification carries the VPC identifier, so that the network edge device notifies the authentication system of deleting related authentication information corresponding to the VPC identifier; and the authentication system corresponds to the bearer network.

Specifically, in an access authentication process, the network edge device receives an authentication request and initiates RADIUS authentication, where one VPC authentication corresponds to one network access system (NAS, Network Access System) port (port) number; the network edge device will establish a correspondence relationship between the VPC identifier and the RADIUS authentication, that is, a correspondence relationship between the VPC identifier and the NAS port number; and in the VPC deletion process, the network edge device may notify the corresponding authentication system of deleting an access authentication record corresponding to the VPC according to the VPC identifier.

The following describes an embodiment of a cloud manager of the present invention for executing the virtual private cloud deletion method. For the structure thereof, reference may be made to FIG. 15. Another embodiment of the cloud manager among the embodiments of the present invention includes a deletion receiving unit 1501, a target searching unit 1502, and a deletion request sending unit 1503, where:
the deletion receiving unit 1501 is configured to receive a first VPC deletion request, where the first VPC deletion request carries a VPC identifier;
the target searching unit 1502 is configured to search for a bearer network of a target VPN according to the VPC identifier and determine a VPN routing device connected to the bearer network and a network edge device address; and
the deletion request sending unit 1503 is configured to send a second VPC deletion request to the VPN routing device, where the second VPC deletion request carries the network edge device address and the VPC identifier.

Specific operation processes of the units in the cloud manager according to the embodiment of the present invention are as follows:

The deletion receiving unit 1501 receives a first VPC deletion request, where the first VPC deletion request carries a VPC identifier; specifically, the first VPC deletion request may be sent by a user to the cloud manager through a cloud service platform, and the VPC identifier is an identifier of a VPC, to be deleted. The target searching unit 1502 searches for a bearer network of a target VPN according to the VPC identifier and determines a VPN routing device connected to the bearer network and a network edge device address, where the target VPN is a VPN accessed by the VPC to be deleted.

In the authentication process, the related configurations of the VPC and the VPN are bound; therefore, the cloud manager may find the bearer network of the target VPN according to the VPC identifier and find the VPN routing device connected to the bearer network and the network edge device address.

After the VPN routing device connected to the bearer network and the network edge device address are determined, the deletion request sending unit 1503 sends a second VPC deletion request to the VPN routing device, where the second VPC deletion request carries the network edge device address and the VPC identifier, so that the VPN routing device sends a VPC deletion request to the network edge device corresponding to the network edge device address, thereby deleting related configuration information of the VPC from an authentication system of the corresponding bearer network.

In the embodiments provided in the present application, it should be noted that, the disclosed apparatus and method may be implemented in other manners. For example, the described apparatus embodiments are merely exemplary. For example, the unit division is merely logical function division and can be other division manners in actual implementation. For example, multiple units or components can be combined or integrated into another system, or some features can be ignored or not performed. In addition, the shown or discussed inter-coupling, direct coupling or communication connection may be implemented through some interfaces. The indirect coupling or communication connection of apparatuses or units may be electrical, mechanical or in other forms.

Units described as separate components may be or may not be physically separated. Components shown as units may be or may not be physical units; that is, they may be located at one place or distributed to a plurality of network units. A part or all of the units may be selected to achieve the objective of the solution of the embodiment according to actual demands.

In addition, the functional units in the embodiments of the present invention may either be integrated in a processing unit, or each be a separate physical unit; alternatively, two or more of the units are integrated in one unit. The integrated unit may be implemented in a form of hardware, and may also be implemented in a form of a software functional unit.

When the integrated unit is implemented in the form of the software functional unit and sold or used as a separate product, the integrated unit may be stored in a computer readable storage medium. On the basis of such comprehension, technical solutions of the present invention, or a part that makes a contribution to the prior art, or all or a part of the technical solutions can be substantially embodied in the form of a software product. The computer software product is stored in a storage medium, including several instructions adapted to instruct a computer equipment (for example, a personal computer, a server, or a network equipment) to perform all or a part of steps in the method according to the embodiments of the present invention. The storage medium includes various media capable of storing program codes, such as, a USB flash disk, a mobile hard disk, a read-only memory (ROM, Read-Only Memory), a random access memory (RAM, Random Access Memory), a magnetic disk, or an optical disk.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for authenticating access of a virtual private cloud VPC, comprising:
receiving, by a virtual private network VPN routing device, a request for accessing a virtual private network VPN by a virtual private cloud VPC, sent by a cloud manager, wherein the request for accessing a VPN by a VPC carries an identifier of a bearer network of a target VPN and a VPN identifier; and
sending, by the VPN routing device, the VPC access request to a network edge device corresponding to the identifier of the bearer network, wherein the VPC access request carries the VPN identifier, so that the network edge device performs VPC access authentication according to the VPN identifier.

2. The method according to claim 1, wherein after the sending the VPC access request to the network edge device corresponding to the identifier of the bearer network, the method further comprises:
receiving an authentication response returned by the network edge device;
if the authentication response indicates success, extracting a VPN configuration parameter carried in the authentication response, and configuring a VPN instance according to the VPN configuration parameter; and
sending an authentication result to the cloud manager according to the authentication response.

3. The method according to claim 1 or 2, wherein the VPN identifier comprises:
a VPN user name;
or, a VPN user name and a password;
or, a VPN name;
or, a VPN name and a password.

4. The method according to any one of claims 1 to 3, wherein
the identifier of the bearer network is one or more of: a network edge device address, a bearer network number, a bearer network name, and a target autonomous system AS number;
if the identifier of the bearer network is a network edge device address, the sending the VPC access request to the network edge device corresponding to the identifier of the bearer network comprises: sending the VPC access request to a network edge device corresponding to the network edge device address; and
if the identifier of the bearer network is a bearer network number, a bearer network name or a target AS number, the sending the VPC access request to the network edge device corresponding to the identifier of the bearer network comprises: sending the VPC access request to a network edge device corresponding to the bearer network number, the bearer network name or the target AS number according to a bearer network routing table.

5. The method according to claim 4, wherein the sending the VPC access request to the network edge device corresponding to the target AS number according to the bearer network routing table comprises:
determining a first network edge device at the next hop according to a path in a bearer network routing list;
sending a VPC access authentication request to the first network edge device, wherein the VPC access authentication request further carries the target AS number; and
if the first network edge device is not the network edge device corresponding to the target AS number, determining, by the first network edge device, a second network edge device at the next hop according to the bearer network routing table, and continuing to forward the VPC access authentication request to the second network edge device until the VPC access authentication request is forwarded to the network edge device corresponding to the target AS number.

6. A method for authenticating access of a virtual private cloud VPC, comprising:
receiving, by a cloud manager, a VPC creation request, wherein the VPC creation request comprises: an identifier of a bearer network of a target virtual private network VPN and a VPN identifier;
searching, by the cloud manager, for a VPN routing device connected to the bearer network according to the identifier of the bearer network; and
sending, by the cloud manager, a request for adding a VPC into a VPN to the VPN routing device, wherein the request for accessing a VPN by a VPC carries the identifier of the bearer network and the VPN identifier, so that the VPN routing device uses the VPN identifier to initiate VPC access authentication to a network edge device corresponding to the identifier of the bearer network.

7. The method according to claim 6, wherein after the sending the request for adding a VPC into a VPN to the VPN routing device, the method comprises:
receiving an authentication result returned by the VPN routing device; and
if the authentication result indicates success, creating, by the cloud manager, a VPC in the VPN routing device, and binding the VPC to a VPN configured on the VPN routing device.

8. The method according to claim 6 or 7, wherein the VPN identifier comprises:
a VPN user name;
or, a VPN user name and a password;
or, a VPN name;
or, a VPN name and a password.

9. A method for authenticating access of a virtual private cloud VPC, comprising:
receiving, by a virtual private network VPN routing device, a request for accessing a VPN by a VPC, sent by a cloud manager, wherein the request for accessing a VPN by a VPC carries a VPN identifier of a target VPN, and the target VPN corresponds to a unique network edge device; and
sending, by the VPN routing device, the VPC access request to the network edge device, wherein the VPC access request carries the VPN identifier, so that the network edge device performs VPC, access authentication according to the VPN identifier.

10. The method according to claim 9, wherein after the sending the VPC access request to the network edge device, the method comprises:
receiving an authentication response returned by the network edge device;
if the authentication response indicates success, extracting a VPN configuration parameter carried in the authentication response, and configuring a VPN instance according to the VPN configuration parameter; and
sending an authentication result to the cloud manager according to the authentication response.

11. The method according to claim 9 or 10, wherein the VPN identifier comprises:
a VPN user name;
or, a VPN user name and a password;
or, a VPN name;
or, a VPN name and a password.

12. A method for authenticating access of a virtual private cloud, comprising:
receiving, by a cloud manager, a VPC creation request, wherein the VPC creation request comprises: a VPN identifier of a target VPN, and the target VPN corresponds to a unique bearer network; and
sending, by the cloud manager, a request for adding a VPC into a VPN to a VPN routing device connected to the bearer network, wherein the request for accessing a VPN by a VPC carries the VPN identifier, so that the VPN routing device uses the VPN identifier to initiate VPC access authentication to a network edge device.

13. The method according to claim 12, wherein after the sending the request for adding a VPC into a VPN to the VPN routing device, the method comprises:
receiving an authentication result returned by the VPN routing device; and
if the authentication result indicates success, creating, by the cloud manager, a VPC in the VPN routing device, and binding the VPC to a VPN configured on the VPN routing device.

14. The method according to claim 12 or 13, wherein the VPN identifier comprises:
a VPN user name;
or, a VPN user name and a password;
or, a VPN name;
or, a VPN name and a password.

15. A method for authenticating access of a virtual private cloud VPC, comprising:
receiving, by a network edge device, a VPC access request sent by a virtual private network VPN routing device, wherein the VPC access request carries a VPN identifier of a target VPN;
sending, by the network edge device, an authentication request to an authentication system a bearer network of the target VPN corresponds to, wherein the authentication request carries the VPN identifier, so that the authentication system authenticates the VPN identifier; and
if the authentication is successful, receiving, by the network edge device, a VPN configuration parameter sent by the authentication system, and returning an authentication response to the VPN routing device, wherein the authentication response carries the VPN configuration parameter.

16. The method according to claim 15, wherein after the receiving the VPN configuration parameter sent by the authentication system, the method further comprises:
extracting a VPN access parameter from the VPN configuration parameter; and
adding the VPN access parameter into an outbound route filtering list ORF, indicating that a VPN routing table in the bearer network may be forwarded to the VPN routing device.

17. The method according to claim 15 or 16, wherein after the receiving the VPN configuration parameter sent by the authentication system, the method comprises:
extracting an access bandwidth parameter from the VPN configuration parameter; and
configuring an access bandwidth limit according to the access bandwidth parameter.

18. A method for deleting a virtual private cloud VPC, comprising:
receiving, by a virtual private network VPN routing device, a VPC deletion request sent by a cloud manager, wherein the VPC deletion request carries a network edge device address of a bearer network of a target VPN and a VPC identifier;
deleting, by the VPN routing device, a VPN instance corresponding to the VPC identifier; and
sending, by the VPN routing device, a VPC deletion notification to a network edge device corresponding to the network edge device address, wherein the VPC deletion notification carries the VPC identifier, so that the network edge device notifies an authentication system of deleting related authentication information corresponding to the VPC identifier.

19. A method for deleting a virtual private cloud VPC, comprising:
receiving, by a cloud manager, a first VPC deletion request, wherein the first VPC deletion request carries a VPC identifier;
searching, by the cloud manager, for a bearer network of a target virtual private network VPN according to the VPC identifier, and determining a VPN routing device connected to the bearer network and a network edge device address; and
sending, by the cloud manager, a second VPC deletion request to the VPN routing device, wherein the second VPC deletion request carries the network edge device address and the VPC identifier.

20. A virtual private network VPN routing device, comprising:
a first receiving unit, configured to receive a request for accessing a virtual private network VPN by a virtual private cloud VPC, sent by a cloud manager, wherein the request for accessing a VPN by a VPC carries an identifier of a bearer network of a target VPN and a VPN identifier; and
a sending unit, configured to send the VPC access request to a network edge device corresponding to the identifier of the bearer network, wherein the VPC access request carries the VPN identifier, so that the network edge device performs VPC access authentication according to the VPN identifier.

21. The VPN routing device according to claim 20, wherein the VPN routing device further comprises:
a second receiving unit, configured to receive an authentication response returned by the network edge device;
an instance configuring unit, configured to, if the authentication response indicates success, extract a VPN configuration parameter carried in the authentication response and configure a VPN instance according to the VPN configuration parameter; and
a result responding unit, configured to send an authentication result to the cloud manager according to the authentication response.

22. A cloud manager, comprising:
a request receiving unit, configured to receive a virtual private cloud VPC creation request, wherein the VPC creation request comprises: an identifier of a bearer network of a target virtual private network VPN and a VPN identifier;
a search unit, configured to search for a VPN routing device connected to the bearer network according to the identifier of the bearer network; and
a request sending unit, configured to send a request for adding a VPC into a VPN to the VPN routing device, wherein the request for accessing a VPN by a VPC carries the identifier of the bearer network and the VPN identifier, so that the VPN routing device uses the VPN identifier to initiate VPC access authentication to a network edge device corresponding to the identifier of the bearer network.

23. The cloud manager according to claim 22, wherein the cloud manager further comprises:
a response receiving unit, configured to receive an authentication result returned by the VPN routing device; and
a creating unit, configured to: if the authentication result indicates success, the cloud manager creates a VPC in the VPN routing device and binds the VPC to a VPN configured on the VPN routing device.

24. A virtual private network VPN routing device, comprising:
a VPN request receiving unit, configured to receive a request for accessing a VPN by a virtual private cloud VPC, sent by a cloud manager, wherein the request for accessing a VPN by a VPC carries a VPN identifier of a target VPN, and the target VPN corresponds to a unique network edge device; and
an access request sending unit, configured to send VPC, access request to the network edge device, wherein the VPC access request carries the VPN identifier, so that the network edge device performs VPC access authentication according to the VPN identifier.

25. The VPN routing device according to claim 24, wherein the VPN routing device further comprises:
a receiving unit, configured to receive an authentication response returned by the network edge device;
an instance configuring unit, configured to, if the authentication response indicates success, extract a VPN configuration parameter carried in the authentication response and configure a VPN instance according to the VPN configuration parameter; and
a result responding unit, configured to send an authentication result to the cloud manager according to the authentication response.

26. A cloud manager, comprising:
a virtual private cloud VPC request receiving unit, configured to receive a VPC creation request, wherein the VPC creation request comprises a VPN identifier of a target virtual private network VPN, and the target VPN corresponds to a unique bearer network; and
a VPN request sending unit, configured to send a request for adding a VPC into a VPN to a VPN routing device connected to the bearer network, wherein the request for accessing a VPN by a VPC carries the VPN identifier, so that the VPN routing device uses the VPN identifier to initiate VPC access authentication to a network edge device.

27. The cloud manager according to claim 26, wherein the cloud manager further comprises:
a response receiving unit, configured to receive an authentication result returned by the VPN routing device; and
a creating unit, configured to: if the authentication result indicates success, the cloud manager creates a VPC in the VPN routing device and binds the VPC to a VPN configured on the VPN routing device.

28. A network edge device, comprising:
an access request receiving unit, configured to receive a virtual private cloud VPC access request sent by a virtual private network VPN routing device, wherein the VPC access request carries a VPN identifier of a target VPN;
an authentication request sending unit, configured to send an authentication request to an authentication system a bearer network of the target VPN corresponds to, wherein the authentication request carries the VPN identifier, so that the authentication system authenticates the VPN identifier; and
an authentication responding unit, configured to: if the authentication is successful, the network edge device receives a VPN configuration parameter sent by the authentication system and returns an authentication response to the VPN routing device, wherein the authentication response carries the VPN configuration parameter.

29. The network edge device according to claim 28, wherein the network edge device further comprises:
a first configuring unit, configured to extract a VPN access parameter from the VPN configuration parameter and add the VPN access parameter into an outbound route filtering list ORF, indicating that a VPN routing table in the bearer network may be forwarded to the VPN routing device; and
a second configuring unit, configured to extract an access bandwidth parameter from the VPN configuration parameter and configure an access bandwidth limit according to the access bandwidth parameter.

30. A virtual private network VPN routing device, comprising:
a deletion request receiving unit, configured to receive a virtual private cloud VPC deletion request sent by a cloud manager, wherein the VPC deletion request carries a network edge device address of a bearer network of a target VPN and a VPC identifier;
an instance deleting unit, configured to delete a VPN instance corresponding to the VPC identifier; and
a notification sending unit, configured to send a VPC deletion notification to a network edge device corresponding to the network edge device address, wherein the VPC deletion notification carries the VPC, identifier, so that the network edge device notifies an authentication system of deleting related authentication information corresponding to the VPC identifier.

31. A cloud manager, comprising:
a deletion receiving unit, configured to receive a first virtual private cloud VPC deletion request, wherein the first VPC deletion request carries a VPC identifier;
a target searching unit, configured to search for a bearer network of a target virtual private network VPN according to the VPC identifier and determine a VPN routing device connected to the bearer network and a network edge device address; and
a deletion request sending unit, configured to send a second VPC deletion request to the VPN routing device, wherein the second VPC deletion request carries the network edge device address and the VPC identifier.
